# EUROPEAN PATENT APPLICATION

(11) **EP 4 813 721 A1**
(43) Date of publication of application: **30.09.2026**
(21) Application number: 25194541.6
(22) Date of filing: 07.08.2025
(51) Int. Cl.: B60L 3/00, B60L 3/12, B60L 58/10, B60L 58/16, B60L 58/21, H02J 7/50, H02J 7/62, H02J 7/84

(54) **CURRENT CONTROL METHOD, CURRENT CONTROL SYSTEM, VEHICLE, AND STORAGE MEDIUM**

(30) Priority: 28.03.2025 US 202519093324
(71) Applicant: Microvast, Inc., Stafford, TX 77477 (US)
(72) Inventor: HUANG, Ying, 14974 Ludwigsfelde (DE); WU, Yuanhang, 14974 Ludwigsfelde (DE); XIAO, Rui, Lake Mary, FL, 32746 (US)
(74) Representative: Meyer-Dulheuer MD Legal Patentanwälte PartG mbB

(57) **Abstract**

The present disclosure relates to a current control method, a current control system, a vehicle, and storage medium. The method is applied to a battery parallel system including a plurality of branches connected in parallel, and the method includes: obtaining a reference branch current limit value of each of the branches; determining a first total current limit value based on a maximum allowable DCIR difference ratio among the branches, the number of the branches, and the reference branch current limit value, such that a branch overcurrent warning will not occur when an actual maximum DCIR difference ratio among the branches is less than or equal to the maximum allowable DCIR difference ratio; and when the branch overcurrent warning occurs, setting a total current limit value of the battery parallel system to the first total current limit value.

## Description

### TECHNICAL FIELD

The present disclosure relates to the field of battery management, and in particular, to a current control method, a current control system, a vehicle, and storage medium.

### BACKGROUND

Batteries are widely used to provide power for operations of devices such as vehicles and the like.

In vehicles, for example, in order to provide power as required, a battery parallel system in which a plurality branches are connected in parallel and each of the branches includes a plurality of battery packs may be used.

In an ideal state, battery packs in each of the branches have the same direct current internal resistance (DCIR) so that the total current of the system is equally distributed among the branches. However, in actual applications, due to various reasons such as discrepancies of manufacture processes for different battery packs, different aging states during use, or replacement or repairment of some of the battery packs in the branches, the battery packs in each of the branches may have different DCIRs.

In order to ensure that the battery system can operate stably and reliably, it is required to monitor and control the total current of the battery system to ensure that the actual current flowing in each branch do not exceed the reference current limit of this branch. However, due to the actual different DCIRs among the branches caused by different DCIRs of the battery packs in each of the branches, how to control the total current of the battery system is a challenging problem.

### SUMMARY

Based on this, it is necessary to provide a current control method, a current control system, a vehicle, and storage medium to address at least one of the problems exist in the current battery parallel systems.

In a first aspect of the present disclosure, a current control method is provided. The current control method can be applied to a battery parallel system. The battery parallel system includes a plurality of branches connected in parallel, each of the plurality of branches includes one or more battery packs. The method includes: obtaining a reference branch current limit value of each of the plurality of branches; determining a first total current limit value of the plurality of branches based on a maximum allowable Direct Current Internal Resistance (DCIR) difference ratio among the plurality of branches, the number of the plurality of branches, and the reference branch current limit value of each of the plurality of branches, wherein the first total current limit value is determined such that a branch overcurrent warning will not occur when an actual maximum DCIR difference ratio among the plurality of branches is less than or equal to the maximum allowable DCIR difference ratio; and when the branch overcurrent warning occurs in the battery parallel system, setting a total current limit value of the battery parallel system from a default total current limit value to the first total current limit value; the branch overcurrent warning occurs when it is detected that an actual current value of at least one of the plurality of branches exceeds the reference branch current limit value.

In an embodiment, obtaining a reference branch current limit value may include obtaining a reference branch current limit value in a present current direction. In an embodiment, setting a total current limit value of the battery parallel system to the first total current limit value may include setting a total current limit value in the present current direction of the battery parallel system to the first total current limit value. The current direction of the system may include a charging direction or a discharging direction.

In an embodiment, the maximum allowable DCIR difference ratio among the plurality of branches may be determined in advance.

In an embodiment, the maximum allowable DCIR difference ratio among the plurality of branches may be determined based on one or more of the following: 1) a State Of Health (SOH) threshold of replacement, when an actual SOH value of one of the branches is lower than the SOH threshold of replacement, at least part of the battery packs of the one of the branches is required to be replaced; 2) a guarantee period, within which when at least part of the battery packs of the one of the branches is required to be replaced, the at least part of the battery packs is replaced for fee free or reduction; and 3) an operating power requirement.

In an embodiment, the default total current limit value may be determined by multiplying a minimum current limit value among the reference branch current limit values of the plurality of branches by the number of the plurality of branches.

In an embodiment, the determining the first total current limit value of the plurality of branches based on the number of the plurality of branches, the maximum allowable DCIR difference ratio, and the reference branch current limit value may include: giving a first assumption that one first branch of the battery parallel system has the lowest internal resistance and is distributed with a first distribution current limit value equal to the reference branch current limit value, giving a second assumption that the remaining second branches other than the first branch of the battery parallel system each has an internal resistance higher than the first branch such that an actual DCIR difference ratio between each of the second branches and the first branch is equal to the maximum allowable DCIR difference ratio, and calculating a second distribution current limit value with which each of the second branches should be distributed under the first and the second assumptions; calculating a total distribution current limit value of the plurality of branches in a case that the first branch is distributed with the first distribution current limit value and each of the second branches is distributed with the second distribution current limit value; and determining the first total current limit value based on the total distribution current limit value, the first total current limit value is less than or equal to the total distribution current limit value.

In an embodiment, the first total current limit value is determined based on a total current limit value reduction coefficient and the default total current limit value.

In an embodiment, the total current limit value reduction coefficient is determined in advance based on the maximum allowable DCIR difference ratio among the plurality of branches, the number of the plurality of branches, and the reference branch current limit value.

In an embodiment, the total current limit value reduction coefficient is a first ratio of the first total current limit value to the default total current limit value, and the first ratio decreases as the maximum allowable DCIR difference ratio increases.

In an embodiment, the total current limit value reduction coefficient is a second ratio of the difference between the default total current limit value and first total current limit value, to the default total current limit value, and the second ratio increases as the maximum allowable DCIR difference ratio increases.

In an embodiment, after setting the total current limit value of the battery parallel system to the first total current limit value, the method may further include: when the branch overcurrent warning occurs once more in the battery parallel system, successively reducing the total current limit value of the battery parallel system by a predetermined current limit value decrement, until the branch overcurrent warning does not occur in the battery parallel system. In an embodiment, the predetermined current limit value decrement is a reduction amount of current limit value by which the total current limit value is reduced for each time. In an embodiment, the predetermined current limit value decrement is in a range of 5% to 20% of the default total current limit value.

In an embodiment, during the process of successively reducing the total current limit value of the battery parallel system, the total current limit value of the battery parallel system may be restricted to be not less than a predetermined total current lower limit value. In an embodiment, the predetermined total current lower limit value is a lowest current limit value which the total current limit value of the battery parallel system is allowed to be. In an embodiment, the predetermined total current lower limit value is in a range of 40% to 60% of the default total current limit value.

In an embodiment, after setting the total current limit value of the battery parallel system to the first total current limit value, the method may further includes: when it is detected that a state in which an actual total current value of the battery parallel system is less than a predetermined proportion of the default total current limit value has been lasted for a time duration reaching a preset time duration threshold, recovering the total current limit value of the battery parallel system to the default total current limit value. In an embodiment the predetermined proportion is in a range of 60% to 80% of the default total current limit value.

In an embodiment, after setting the total current limit value of the battery parallel system to the first total current limit value, the method further comprises a step of setting a total current limit value in an opposite current direction that is opposite to a present current direction of the battery parallel system based on an actual SOC of each of the plurality of branches. In an embodiment, a plurality of reference State of Charge (SOC) difference ranges being higher than an SOC difference threshold, and a plurality of designated total current limit values in a charging direction and a discharging direction respectively corresponding to the plurality of SOC difference ranges, are pre-stored in the battery parallel system, and the step of setting the total current limit value in the opposite current direction based on the actual SOC of each of the plurality of branches may include:
monitoring an actual SOC of each of the plurality of branches; and when it is monitored that an actual maximum SOC difference among the plurality of branches in a present current direction transitions from not exceeding the SOC difference threshold to exceeding the SOC difference threshold, marking an opposite current direction that is opposite to the present current direction as a valid current direction, and maintaining the marking of the valid current direction until it is monitored that an actual maximum SOC difference among the plurality of branches in a present current direction transitions from exceeding the SOC difference threshold to not exceeding the SOC difference threshold; during a time period within which the marking of the valid current direction is maintained, when an actual maximum SOC difference among the plurality of branches in a present current direction falls within a first reference SOC difference range of the plurality of reference SOC difference ranges, and in condition that an opposite current direction that is opposite to the present current direction is the one marked as the valid current direction, setting a total current limit value in the opposite current direction of the battery parallel system to a first designated total current limit value in the opposite current direction that corresponds to the first reference SOC difference range; in condition that the opposite current direction is not the one marked as the valid current direction, forbidding setting the total current limit value in the opposite current direction to the first designated total current limit value.

In an embodiment, after setting the total current limit value of the battery parallel system to the first designated total current limit value that corresponds to the first reference SOC difference range, the method may further include: when it is monitored that the actual maximum SOC difference among the plurality of branches is changed to fall within a second reference SOC difference range of the plurality of reference SOC difference ranges that is different from the first reference SOC difference range, setting the total current limit value in the opposite current direction of the battery parallel system to a second designated total current limit value in the opposite current direction that corresponds to the second reference SOC difference range.

In an embodiment, after setting the total current limit value in the opposite current direction of the battery parallel system to the first designated total current limit value that corresponds to the first reference SOC difference range, the method may further include: when it is detected that the actual maximum SOC difference among the plurality of branches is changed to be no more higher than the SOC difference threshold and falls out of all of the plurality of reference SOC difference ranges, recovering the total current limit value in the opposite current direction of the battery parallel system to a default total current limit value in the opposite current direction, and clearing the marking of the valid current direction.

In a second aspect of the present disclosure, a current control system is provided. The current control system includes a battery management system. The battery management system is communicatively connected to a battery parallel system. The battery parallel system includes a plurality of branches connected in parallel, each of the plurality of branches includes one or more battery packs. The battery management system includes a memory and a processor, the memory stores computer readable instructions, which, when executed by the processor, cause the processor to perform operations includes: obtaining a reference branch current limit value of each of the plurality of branches; determining a first total current limit value based on a maximum allowable Direct Current Internal Resistance (DCIR) difference ratio among the plurality of branches, the number of the plurality of branches, and the reference branch current limit value of each of the plurality of branches, wherein the first total current limit value is determined such that a branch overcurrent warning will not occur when an actual maximum DCIR difference ratio among the plurality of branches is less than or equal to the maximum allowable DCIR difference ratio; and when the branch overcurrent warning occurs in the battery parallel system, setting a total current limit value of the battery parallel system from a default total current limit value to the first total current limit value; the branch overcurrent warning occurs when it is detected that an actual current value of at least one of the plurality of branches exceeds the reference branch current limit value.

In an embodiment, the current control system may further include the battery parallel system.

In an embodiment, the battery management system may include: a plurality of parallel battery management units, each of the plurality of parallel battery management units is communicatively connected to a corresponding one of the plurality of branches respectively, and is configured to: determine a reference branch current limit value in the present current direction of the corresponding one of the plurality of branches, monitor an actual current value of the corresponding one of the plurality of branches, and cause a branch overcurrent warning when it is detected that the actual current value of the corresponding one of the plurality of branches exceeds the reference branch current limit value in the present current direction of the corresponding one of the plurality of branches; and a main battery management unit, electrically connect to the plurality of parallel battery management units, and is configured to: obtain a reference branch current limit value in the present current direction of each of the plurality of branches from the plurality of parallel battery management units, and set the total current limit value in the present current direction of the battery parallel system based on the obtained reference branch current limit value in the present current direction of each of the plurality of branches. The memory and the processor are included in the main battery management unit and/or the plurality of parallel battery management units.

In an embodiment, the current control system may further include: a plurality of current sensors, each of the plurality of current sensors is disposed in a corresponding one of the plurality of branches, and is configured to detect an actual current value in the corresponding one of the plurality of branches and transmit the detected actual current value to the battery management system.

In an embodiment, the current control system may further include: a plurality of relays, each of the plurality of relays is disposed in a corresponding one of the plurality of branches, and is configured to switch on or off the corresponding one of the plurality of branches in response to an instruction received from the battery management system.

In a third aspect of the present disclosure, a vehicle is provided. The vehicle includes a vehicle control unit and the above current control system. The battery parallel system is mounted on the vehicle, and is configured to provide power for operations of the vehicle. The battery management system is communicatively connected to the vehicle control unit, and is configured to set the total current limit value in the present current direction of the battery parallel system by sending a total current limit instruction to the vehicle control unit, the total current limit instruction is used to instruct the vehicle control unit to limit an actual current in the present current direction between the vehicle and the battery parallel system to be no more than the total current limit value in the present current direction.

In a fourth aspect of the present disclosure, a non-transitory computer readable storage medium is provided. The non-transitory computer readable storage medium is stored thereon a computer program. When the computer program is executed by a processor, the processor is caused to implement the above current control method.

### BRIEF DESCRIPTION OF THE DRAWINGS

FIG. 1 is a flow chart illustrating the current control method according to an embodiment of the present disclosure.
FIG. 2 is a table illustrating an example of a reference branch current limit value table in the charging direction according to an embodiment of the present disclosure.
FIG. 3 is a table illustrating an example of a reference branch current limit value table in the discharging direction according to an embodiment of the present disclosure.
FIG. 4 is a flow chart illustrating the determination process of the first total current limit value according to an embodiment of the present disclosure.
FIG. 5 is a table illustrating designated total current limit values corresponding to different SOC difference according to an embodiment of the present disclosure.
FIG. 6 is a table illustrating the setting of the total current limit value under different state of the system according to an embodiment of the present disclosure.
FIG. 7 is a diagram illustrating the configuration of a current control system according to an embodiment of the present disclosure.
FIG. 8 is a diagram illustrating the configuration of a current control system according to an embodiment of the present disclosure.
FIG. 9 is a diagram illustrating the configuration of a current control system according to an embodiment of the present disclosure.
FIG. 10 is a diagram illustrating the configuration of a vehicle according to an embodiment of the present disclosure.

### DETAILED DESCRIPTION OF THE EMBODIMENTS

In order to make the above objectives, features and advantages of the present disclosure more obvious and understandable, specific implementations of the present disclosure are described in detail below with reference to the accompanying drawings. In the following description, many specific details are set forth in order to fully understand the present disclosure. However, the present disclosure can be implemented in many other ways different from those described herein, and those skilled in the art can make similar improvements without departing from the connotation of the present disclosure. Therefore, the present disclosure is not limited by the specific embodiments disclosed below.

As discussed above, the battery packs in each of the branches of a battery parallel system may have different DCIRs in actual applications due to various reasons. In order to ensure the stable and reliable operations of the battery parallel system, it is necessary to control the total current of the battery parallel system consisting of battery packs with different DCIRs in a proper way.

In the related art, the total current limit value of the battery parallel system can be determined according to the minimum reference current limit value among the branches by the following equation: the total current limit value = the minimum reference current limiting value among the branches × the number of available branches. During actual operation, due to the different aging states and SOH of each battery pack, the DCIRs of the battery packs in each branch are different, the total current of the system is unevenly distributed among different branches. When the actual current of a branch exceeds the reference current limit value of that branch, a branch overcurrent warning is occurred. When facing such a condition, a first method is to reduce the reference current limit value of that branch for which the warning is occurred. With the first method, although the total current limit value of the system is decreased accordingly according to the above equation, the actual current of that branch may still exceed the reduced reference current limit value of that branch due to said uneven current distribution, thus causing another branch overcurrent warning. A second method is to directly cut off that branch for which the warning is occurred. With the second method, the total current limit value of the battery parallel system is recalculated for the remaining connected branches, but the actual current of some of the remaining connected branches may still exceed the reference current limit values of these branches due to said uneven current distribution, thus causing another branch overcurrent warning. These repeatedly warnings and adjustments may affect the stable function of the system. The frequently occurred warnings may also cause disturbance to the user and negatively impacting the user experience.

Based on this, the present disclosure provides a current control method, a current control system, a vehicle, and a storage medium that can control the total current limit value of the battery parallel system more appropriately.

In a first aspect of the present disclosure, a current control method is provided. The current control method may be applied in a current control system which will be described more specifically later. Generally, the current control method may be performed by a battery management system included in the current control system. The battery management system can apply the method to a battery parallel system so as to control the total current limit of the battery parallel system. The battery parallel system generally includes a plurality of branches connected in parallel, each of the plurality of branches may include one or more battery packs. The one or more battery packs in each branch may be connected with each other in parallel, in series, or partially in parallel and partially in series. Each of the battery packs may be consisted of a plurality of modules connected in parallel and/or in series, and each of the battery modules may further be consisted of a plurality of cells connected in parallel and/or in series.

During operation, the battery management system obtains a reference branch current limit value of each of the plurality of branches, and monitors the present current flowing on each of the plurality of branches. When it is detected that an actual current value of at least one of the plurality of branches exceeds the reference branch current limit value of the at least one branch, the battery management system raises a branch overcurrent warning for the battery parallel system. Before a branch overcurrent warning occurs, that is, when the battery parallel system is operating in a normal state, the total current limit value of the battery parallel system can be set to a default total current limit value. The battery management system may further determine a first total current limit value based on a maximum allowable Direct Current Internal Resistance (DCIR) difference ratio among the plurality of branches, the number of the plurality of branches, and the reference branch current limit value, the first total current limit value is determined such that the branch overcurrent warning will not occur when an actual maximum DCIR difference ratio among the plurality of branches is less than or equal to the maximum allowable DCIR difference ratio. The first total current limit value may be determined and updated repeatedly at a predetermined time interval throughout the operation of the system, so that once the warning occurs, the latest determined first total current limit value can be used to update the total current limit value of the battery parallel system. Alternatively, the first total current limit value may be determined in real time after a branch overcurrent warning occurs, and then the determined first total current limit value can be used to update the total current limit value. The battery management system monitors whether a branch overcurrent warning occurs, and when a branch overcurrent warning occurs for the battery parallel system, the battery management system sets the total current limit value of the battery parallel system from the default total current limit value to the first total current limit value, and the state of the battery management system is switched from the normal state to an overcurrent warning state.

In the above current control method, the first total current limit value is determined based on a maximum allowable DCIR difference ratio among the branches. When a branch overcurrent warning occurs, the total current limit value of the battery parallel system can be directly decreased from the default total current limit value to the first total current limit value. In this way, the total current limit value can be decreased more efficiently, and as long as the actual maximum DCIR difference ratio among the plurality of branches is less than or equal to the maximum allowable DCIR difference ratio, the branch overcurrent warning would not be easily occurred again. Therefore, the system can function more stably and the user experience can be improved.

The monitoring and control of the current of the battery parallel system, may be relevant to the current direction of the battery parallel system. The current direction of the battery parallel system may include a charging direction or a discharging direction. The charging direction of battery parallel system refers to a current direction in which the battery parallel system is charged with electric power from the outside. For example, when the battery parallel system is connected to an outside power source and is charged by the power source, or when the battery parallel system is mounted on a vehicle and a power regeneration is triggered under a braking operation by the user, current will flow from outside into the battery parallel system, and so that the current direction of the battery parallel system is in the charging direction. On the other hand, the discharging direction of battery parallel system refers to a current direction in which the battery parallel system discharges electric power to the outside. For example, when the battery parallel system is connected to a load (for example a vehicle) and is supplying power to the load, current will flow from the battery parallel system to the outside, and so that the current direction of the battery parallel system is in the discharging direction.

In some embodiments, the total current limit value in the charging direction of the battery parallel system, and the total current limit value in the discharging direction of the battery parallel system, are controlled independently from each other, which can be call as two-direction control configuration. In such embodiments with two-direction control configuration, a reference branch current limit value in a charging direction and a reference branch current limit value in a discharging direction of each of the branches may be prestored, and the step of obtaining a reference branch current limit value of a branch may include obtaining the prestored reference branch current limit value in a present current direction of that branch. Correspondingly, the system may maintain (i.e. continuously update and record) both a reference branch current limit value in a charging direction and a reference branch current limit value in a discharging direction for the battery parallel system at the same time, and the step of setting a total current limit value of the battery parallel system to the first total current limit value may include setting a total current limit value in the present current direction of the battery parallel system to the first total current limit value.

In some embodiments, the total current limit value in the charging direction of the battery parallel system, and the total current limit value in the discharging direction of the battery parallel system, may be controlled collectively, which can be call as one-direction control configuration. In such embodiments with one-direction control configuration, one reference branch current limit value of each of the branches which can be used for both the charging direction and the discharging direction may be prestored, and the step of obtaining a reference branch current limit value of a branch may include obtaining the prestored one reference branch current limit value of that branch, no matter which direction the present current direction is. Correspondingly, the system may maintain one reference branch current limit value for the battery parallel system, which is a reference branch current limit value used for limiting the current in the present current direction by default, and the step of setting a total current limit value of the battery parallel system to the first total current limit value may include setting a total current limit value (it is by default in the present current direction) of the battery parallel system to the first total current limit value.

The current control method provided by the present disclosure, can be applied to the above two-direction control configuration or the above one-direction control configuration. In the following embodiments, examples are mainly given to illustrate the embodiments with two-direction control configuration, for which the expression of "in a/the present current direction" as recited are included. However, the examples for embodiments with one-direction control configuration, for which the expression of "in a/the present current direction" as recited can be excluded, can be derived from these examples in a similar way, by simply removing the distinguishing between the charging direction and the discharging direction and collectively use one parameter for both the charging direction and the discharging direction.

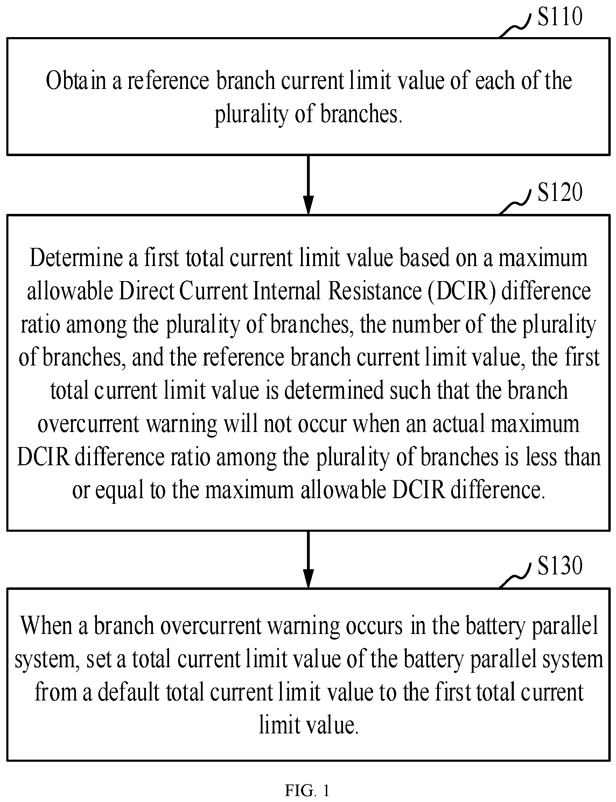

Referring to FIG. 1, in an embodiment of the present disclosure, the current control method may include the following steps of S110 to S 130.

In step S110, a reference branch current limit value (in a present current direction) of each of the plurality of branches is obtained.

The reference branch current limit value of a branch is a value indicating the current scope within which the current of the branch should be kept in order to make the branch to operate stably and without significant deterioration. During the operation, it is desired that the actual current of a branch is kept to be no more than the reference branch current limit value of the branch. Otherwise, when it is detected that an actual current value of at least one of the branches exceeds the reference branch current limit value of the at least one branch, then a branch overcurrent warning will occur to remind the system and/or the user to take measurements to clear the warning.

Information used to obtain the reference branch current limit value in a charging direction and the reference branch current limit value in a discharging direction of each branch may be prestored on the battery management system. In some embodiments, the reference branch current limit values in the charging or discharging directions of each branch may be varied depending on the temperature and/or the SOC of the branch. The SOC of a battery pack is a state of charge of the battery pack, which represents how much electric energy is remained in the pack. The SOC can be represented by a percentage ranging from 0% to 100%, when the percentage is 0%, the pack is fully discharged, and when the percentage is 100%, the pack is fully charged. It is to be noted that, the SOC of a branch in the present disclosure, refers to a representative SOC of all the battery packs of this branch, which may for example be an average SOC of the battery packs of this branch. The system may keep a value of the SOC of each branch by reading the value of the SOC of that branch stored in the system (for example, in the EEPROM of the system) when the system is powered on and correcting and updating the value of the SOC as read at a predetermined time interval during the operation. In this way, the system may obtain the value of the SOC of a branch as kept at any time when needed. In some embodiments, the reference branch current limit values in the charging or discharging directions of each branch may be obtained based on a reference branch current limit value table prestored on the system.

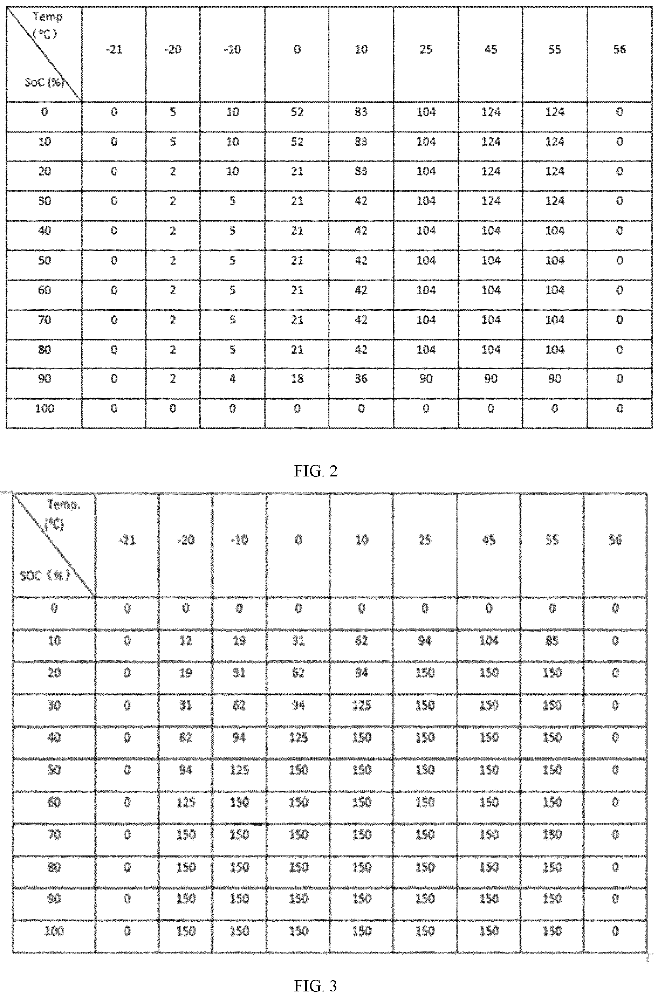

FIG. 2 shows an example of a reference branch current limit value table in the charging direction. FIG. 3 shows an example of a reference branch current limit value table in the discharging direction. A reference branch current limit value in a present current direction of each of the plurality of branches can be determined in real time by referring to the reference branch current limit value table in the present current direction, by using the detected temperature and the SOC of each branch. A temperature sensor may be disposed for each of the branches, and each of the temperature sensors detects and transmits the temperature value of a corresponding branch to the battery management system 100, in this way, the battery management system 100 may obtain the detected temperature of each branch and use it in the determination of the reference branch current limit value. Alternatively, a temperature sensor may be disposed for the entire battery parallel system, and the temperature sensor may detect and transmit the temperature value of the entire battery parallel system to the battery management system 100. The battery management system 100 may instead use the temperature value of the entire battery parallel system as the detected temperature of each branch. For example, if the present current direction of the system is in the charging direction, and the detected temperature of BR1 and the detected temperature of BR2 are both 10°C, and a branch of BR1 in the system has a SOC of 80%, a branch of BR2 in the system has a SOC of 90%, then the reference branch current limit value in the present current direction of branch BR1 can be obtained as 42A, and the reference branch current limit value in the present current direction of branch BR2 can be obtained as 36A. It is to be noted that, if the detected value of the temperature and the SOC value of the branch is not exactly the same as any of the values recited in the table, the reference branch current limit value in the present current direction of a branch may also be estimated based on the values in the table, for example by the method of linear interpolation. As such, N reference branch current limit values in the present current direction can be obtained for N available branches in the system, N represents a number and may be a positive integer. For example, N may be 2 or more.

As described before, before a branch overcurrent warning occurs, that is, when the system is in the normal state, the total current limit value of the battery parallel system may be set to a default total current limit value.

In an embodiment, the default total current limit value in the present current direction may be determined by multiplying a minimum current limit value among the reference branch current limit values in the present current direction of the plurality of branches by the number of the plurality of branches.

As described above, N reference branch current limit values in the present current direction can be obtained for N available branches in the system. For example, if there are N=2 branches in total in the system, and the minimum current limit value among the 2-reference branch current limit values in the present current direction is 83A, then the default total current limit value in the present current direction of the system is 83A×2=166A. Similarly, for a system with 3 available branches and the minimum current limit value in the system being 83A, the default total current limit value is 83A×3=249A, and for a system with 5 available branches and the minimum current limit value in the system being 83A, the default total current limit value is 83A×5=415A.

In step S120, a first total current limit value in the present current direction of the plurality of branches is determined based on a maximum allowable Direct Current Internal Resistance (DCIR) difference ratio among the plurality of branches, the number of the plurality of branches, and the reference branch current limit value in the present current direction of each of the plurality of branches.

As discussed above, a branch overcurrent warning will occur when it is detected that an actual current value of a branch exceeds the reference branch current limit value of that branch. For example, if the actual current value of branch BR1 is detected as 45A, which is higher than the 42A of the reference branch current limit value in the present current direction of branch BR1, then a branch overcurrent warning will occur for the branch BR1. In this step, the first total current limit value is determined such that the branch overcurrent warning will not occur when an actual maximum DCIR difference ratio among the plurality of branches is less than or equal to the maximum allowable DCIR difference ratio.

It is to be noted that, the DCIR of a branch in the present disclosure, refers to a representative DCIR of all the battery packs of this branch, which may for example be an average DCIR of the battery packs of this branch.

In the present disclosure, when a parameter is prefixed with a word "actual", this means that the parameter prefixed with the "actual" is an actual/real value of the parameter exists in the battery parallel system during operation in practical application. The real value of the parameter may be detected by using a detector. For example, the actual DCIR difference ratio among the plurality of branches, refers to the actual/real value of DCIR difference ratio among the plurality of branches of the battery parallel system during operation.

The DCIR difference ratio between two branches, may refer to a ratio of the difference between a higher DCIR of one of the two branches and a lower DCIR of the other of the two branches, to the lower DCIR of the other of the two branches. Therefore, the maximum DCIR difference ratio among a plurality of branches, may refer to a ratio of the difference between the highest DCIR of the branches and the lowest DCIR of the branches, to the lowest DCIR of the branches. Accordingly, the actual maximum DCIR difference ratio among the plurality of branches, refers to the actual/real maximum value of DCIR difference ratio among the plurality of branches of the battery parallel system during operation. The maximum allowable DCIR difference ratio among the plurality of branches, refers to a highest value that is allowable for the actual maximum DCIR difference ratio among the plurality of branches to be. In other words, the actual DCIR difference ratio among the plurality of branches is desired to be restricted to be no more than the maximum allowable DCIR difference ratio among the plurality of branches. The maximum allowable DCIR difference ratio may be an expected or estimated value determined in advance, for example by a technicist of the manufacturer of the battery control system and/or with computer-implemented algorithms, in consider of various factors. Then the maximum allowable DCIR difference ratio may be prestored on the system for use. The maximum allowable DCIR difference ratio is preferably designed to be not too large so that the first total current limit value to be decreased to would not be too low to excessively reduce the operating power and thus operating performance of the system.

In an embodiment, the maximum allowable DCIR difference ratio among the plurality of branches may be determined based on one or more of the following factors: 1) a State Of Health (SOH) threshold of replacement, when an actual SOH value of one of the branches is lower than the SOH threshold of replacement, at least part of the battery packs of the one of the branches is required to be replaced; 2) a guarantee period, within which when at least part of the battery packs of the one of the branches is required to be replaced, the at least part of the battery packs is replaced for fee free or fee reduction; and 3) an operating power requirement. The maximum allowable DCIR difference ratio may be determined based on the history data of a large amount of battery parallel systems in consideration of the above factors. For example, the maximum allowable DCIR difference ratio may be determined such that, during the guarantee period, the total cost for providing the service of replacements of the battery packs with fee free or fee reduction is under budget, while the output power required for the load to operate normally can be ensured. For example, the maximum allowable DCIR difference ratio for a battery parallel system is set to a value such that the SOH of each of the branches of the battery parallel system is kept in a range of 80% to 100% during the guarantee period.

For example, but not limited to, the maximum allowable DCIR difference ratio for a battery parallel system with 2 branches can be set as 100% (that is, $\frac{a highe DCIR - a lowest DCIR}{the lowest DCIR} \leq 100 %$ ), the maximum allowable DCIR difference ratio for a battery parallel system with 3 branches can be set as 80% (that is, $\frac{a highest DCI lowest DCIR}{the lowest DCIR} \leq 80 %$), and the maximum allowable DCIR difference ratio for a battery parallel system with 5 branches can be set as 60% (that is, $\frac{a highest DCIR - a lowest DCIR}{the lowest DCIR} \leq 60 %$), etc.

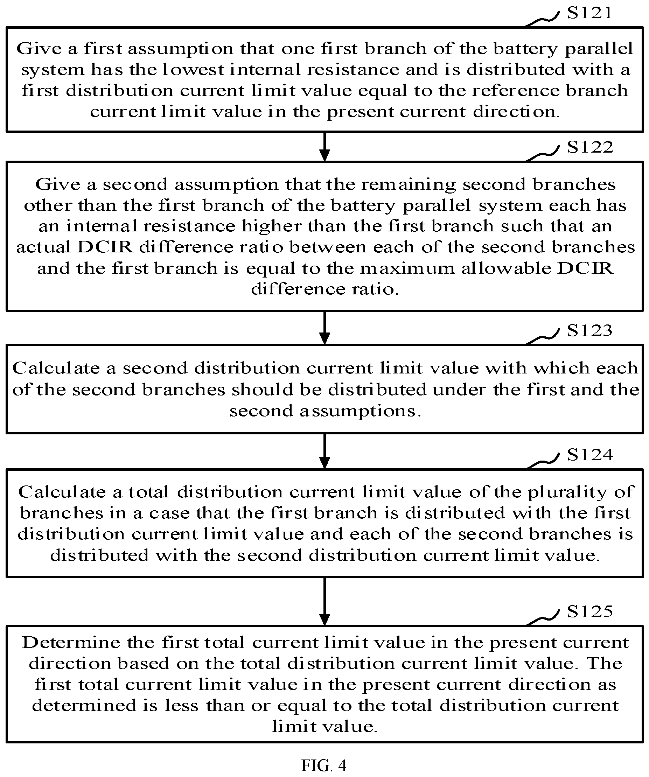

In an embodiment, referring to FIG. 4, step S120 may include the following steps S121-S125.

In step 121, a first assumption that one first branch of the battery parallel system has the lowest internal resistance and is distributed with a first distribution current limit value equal to the reference branch current limit value in the present current direction is given.

In step 122, a second assumption that the remaining second branches other than the first branch of the battery parallel system each has an internal resistance higher than the first branch such that an actual DCIR difference ratio between each of the second branches and the first branch is equal to the maximum allowable DCIR difference ratio is given.

In step 123, a second distribution current limit value with which each of the second branches should be distributed under the first and the second assumptions is calculated.

In step 124, a total distribution current limit value of the plurality of branches in a case that the first branch is distributed with the first distribution current limit value and each of the second branches is distributed with the second distribution current limit value is calculated.

In step 125, the first total current limit value in the present current direction is determined based on the total distribution current limit value. The first total current limit value in the present current direction as determined is less than or equal to the total distribution current limit value. In an embodiment, the first total current limit value in the present current direction can be determined as being the total distribution current limit value. As such, the first total current limit value in the present current direction as determined would be equal to the total distribution current limit value. In another embodiment, the first total current limit value in the present current direction can be determined by subtracting a margin from the total distribution current limit value. As such, the first total current limit value in the present current direction as determined would be less than the total distribution current limit value.

In step S120, one reference branch current limit value in the present current direction is used to determine the first total current limit value. When there is a plurality of different reference branch current limit values in the present current direction for the plurality of branches, one representative reference branch current limit value can be chosen from the plurality of reference branch current limit values. For example, the minimum reference branch current limit value can be chosen from the plurality of reference branch current limit values in the present current direction.

The first total current limit value is a parameter indicating the current limit the system should be decreased to when a branch overcurrent warning occurs. In actual use, it may be recorded in the system as a definite value/magnitude of the current limit, however this is not limited, instead, in some embodiments, it may be represented in other forms.

In some embodiment, the first total current limit value in the present current direction may be represented by a total current limit value reduction coefficient. The total current limit value reduction coefficient is a parameter indicating the degree of reduction of the first total current limit value in the present current direction from the default total current limit value in the present current direction, or in other words, it is a parameter indicating a relationship between the default total current limit value in the present current direction and the reduced first total current limit value in the present current direction. By using the total current limit value reduction coefficient, it can better show that how much the current limit value is decreased from the default total current limit value. The first total current limit value can be determined based on a total current limit value reduction coefficient and the default total current limit value.

In a specific example, and as will be used in subsequent embodiments, the total current limit value reduction coefficient may be a first ratio of the first total current limit value to the default total current limit value, that is, a proportion of the default total current limit value, and the first ratio decreases as the maximum allowable DCIR difference ratio increases. In this case, the first total current limit value can be determined by multiplying the default total current limit value by the total current limit value reduction coefficient. For example, for the system with 2 branches, if the default total current limit value in the present current direction of the system is 166A, and the first total current limit value in the present current direction is 116.2A, then the total current limit value reduction coefficient may be recorded as 70%, which means that the first total current limit value in the present current direction is 70% of the default total current limit value in the present current direction. It can be understood that, the first ratio/proportion representing the first total current limit value will decrease as the maximum allowable DCIR difference ratio increases.

Alternatively, in another specific example, the total current limit value reduction coefficient may be a second ratio of the difference between the default total current limit value and first total current limit value, to the default total current limit value, that is, a reduction proportion of the default total current limit value. In this case, the first total current limit value can be determined by subtracting a product of the default total current limit value and the total current limit value reduction coefficient from the default total current limit value. For example, for the above-described system with 2 branches, if the default total current limit value in the present current direction of the system is 166A, and the first total current limit value in the present current direction is 116.2A, then the total current limit value reduction coefficient may alternatively be recorded as 30%, which means that the first total current limit value in the present current direction is (1-30%) of the default total current limit value in the present current direction. It can be understood that, the second ratio/reduction proportion will increase as the maximum allowable DCIR difference ratio increases.

In some embodiments, in step S120, the first total current limit value in the present current direction of the plurality of branches is determined in real time based on the maximum allowable DCIR difference ratio determined in advance, the number of the plurality of branches, and the reference branch current limit value in the present current direction of each of the plurality of branches obtained in real time. More specifically, in some further embodiments, step S120 may include: performing the above steps S121-S125 in real time.

For example, but not limited to, for a battery parallel system with 2 branches, when the present current direction is in the charging direction, and the selected/obtained one reference branch current limit value is 83A, and given that the maximum allowable DCIR difference ratio of this system is 100%, then a first assumption can be given that one branch in the system is a branch has a lower internal resistance of 1R (i.e. the battery packs of this branch are less aged) and is distributed with said 83A, a second assumption can be given that the remaining one branch in the system has a higher internal resistance of 2R (i.e. the battery packs of this branch are more aged), then it can be calculated that the remaining branch should be distributed with 83A ÷ 2=41.5A, and the total distribution current limit value=83A+41.5A=124.5A. Based on this, the first total current limit value in the charging direction can be determined by subtracting a margin from the total distribution current limit value. For example, the margin may be set to 6.77% of the original value, that is, the total distribution current limit value. Therefore, the first total current limit value in the charging direction=124.5A-124.5A×6.67%≈116.2A, which is slightly lower than the 124.5A. The specific value of the margin here and the margins in other parts of the disclosure can be set in advance as appropriate according to actual needs. For example, the margin may also be set to a fixed of 4.5A, then the first total current limit value in the charging direction may be set as 120A, etc., as long as it is no more than the total distribution current limit value of 124.5A. Exemplarily, the value each of the margins in the disclosure is limited to be less than 10% or 5% of the original value, so that the final used value calculated by subtracting the margin from the original value would not be deviated too much from the original value. In another example, the first total current limit value in the charging direction may be directly determined as being the total distribution current limit value=124.5A, as such, no margin is left between the total distribution current limit value and the first total current limit value.

Similarly, for a battery parallel system with 3 branches, when the present current direction is in the charging direction, and the selected/obtained one reference branch current limit value is 83A, and given that the maximum allowable DCIR difference ratio of this system is 80%, then a first assumption can be given that one branch in the system is a branch has a lowest internal resistance of 1R (i.e. the battery packs of this branch are less aged) and is distributed with said 83A, a second assumption can be given that the remaining two branches in the system each have a highest internal resistance of 1.8R (i.e. the battery packs of this branch are more aged), then it can be calculated that the remaining two branches should be distributed with 83A ÷ 1.8≈46.1A, and the total distribution current limit value≈83A+46.1A×2≈175.2A. Based on this, the first total current limit value in the charging direction can be set as 174.3A, which is slightly lower than the 175.2A with a margin left.

Similarly, for a battery parallel system with 5 branches, in condition that the selected/obtained one reference branch current limit value is 83A, and the maximum allowable DCIR difference ratio of this system is 60%, the total distribution current limit value≈83A+51.9A×4≈290.6A. Based on this, the first total current limit value in the charging direction can be set as 290.5A with a slight margin left.

However, said real time determination of the first total current limit value can be time-consuming. In some other embodiments, some of the determination of the first total current limit value can be performed in advance so that the determination of the first total current limit value can be performed more simply and fast, which will be described below.

In some other embodiments in which the first total current limit value in the present current direction is represented by the total current limit value reduction coefficient, step S120 may include: S127, determining the first total current limit value based on a total current limit value reduction coefficient and the default total current limit value in the present current direction obtained in real time; the total current limit value reduction coefficient is determined in advance based on the maximum allowable DCIR difference ratio among the plurality of branches, the number of the plurality of branches, and the reference branch current limit value. More specifically, in some further embodiments, step S120 may include determining the total current limit value reduction coefficient in advance by performing the above steps of S121-S124 and the following step S126 in advance, and determining the first total current limit value in real time by performing the above step S127 in real time. Where the S126 may include determining the total current limit value reduction coefficient in the present current direction based on the total distribution current limit value, and the total current limit value reduction coefficient in the present current direction is determined to ensure that the corresponding first total current limit value is less than or equal to the total distribution current limit value. In other words, the above S125 may instead include the step S126 performed in advance and the S127 performed in real time.

In condition that both the default total current limit value in the present current direction and the first total current limit value in the present current direction are each determined based on the minimum reference current limiting value among the branches, once the maximum allowable DCIR difference ratio is determined in advance as a fixed value, the total current limit value reduction coefficient which represents the relationship between the default total current limit value in the present current direction and the first total current limit value in the present current direction is also a fixed value. Therefore, in the above embodiments, as the system will always maintain the default total current limit value in the present current direction obtained in real time, it not necessary to calculate the first total current limit value in the present current direction from the most beginning, instead, the first total current limit value in the present current direction can be simply calculated based on the total current limit value reduction coefficient and the default total current limit value in the present current direction obtained in real time. For example, for the above-described system with 2 branches, by using steps S121-S124 and step S126, in a similar way as the above-described example, the total current limit value reduction coefficient as the first ratio can be determined in advance. For example, for a battery parallel system with 2 branches, when the present current direction is in the charging direction, the minimum reference branch current limit value may be assumed as I, and given that the maximum allowable DCIR difference ratio of this system is 100%, then a first assumption can be given that one branch in the system is a branch has a lower internal resistance of 1R (i.e. the battery packs of this branch are less aged) and is distributed with said I, a second assumption can be given that the remaining one branch in the system has a higher internal resistance of 2R (i.e. the battery packs of this branch are more aged), then it can be calculated that the remaining branch should be distributed with I/2, and the total distribution current limit value=I+ I/2= 3I/2. At the same time, the default total current limit value can be calculated as I×2=2I. It can be seen that 3I/2 ÷ 2I=75%. Based on this, the total current limit value reduction coefficient can be determined by subtracting a margin from the ratio of the total distribution current limit value to the default total current limit value. For example, the margin may be set to a fixed percentage value of 5%. Therefore, the total current limit value reduction coefficient=75%-5%=70%, which is slightly lower than the 75%. Then the total current limit value reduction coefficient of 70% determined in advance can be prestored in the system. When a branch overcurrent warning occurs at time T1, and it is needed to calculate the first total current limit value in the present current direction at time T1, it can be calculated in a simple way by directly multiplying the default total current limit value in the present current direction at time T1 by 70%, which is much more efficient than calculate the first total current limit value in the present current direction at time T1 from the very beginning by using the maximum allowable DCIR difference ratio determined in advance, the number of the plurality of branches, and the reference branch current limit value in the present current direction of each of the plurality of branches obtained in real time.

In step S130, when a branch overcurrent warning occurs in the battery parallel system, setting a total current limit value in the present current direction of the battery parallel system from a default total current limit value to the first total current limit value in the present current direction.

As described above, when the battery parallel system is operating in a normal state in both the charging direction and the discharging direction, the total current limit value in the charging direction of the battery parallel system can be set to a default total current limit value in the charging direction, and the total current limit value in the discharging direction of the battery parallel system can be set to a default total current limit value in the discharging direction. When a branch overcurrent warning occurs in the present current direction in the battery parallel system, and a first total current limit value in the present current direction is determined, then the total current limit value in the present current direction of the system can be decreased to the determined first total current limit value in the present current direction. For example, for the above-described system with 2 branches, when the first total current limit value in the present current direction is determined as 70% of the default total current limit value in the present current direction, and the present current direction is in the charging direction, then the total current limit value in the charging direction of the system can be decreased to 70% of the default total current limit value in the charging direction.

When some of the battery packs in the system are replaced while others are not, it's possible there would be DCIR differences among the branches. In this condition, when a branch overcurrent warning occurs, there is a possibility that this warning is caused by said DCIR differences. When the branch overcurrent warning occurs, by using the above method to decrease the total current limit value in the charging direction of the system to the first total current limit value in the present current direction, as long as the actual maximum DCIR difference ratio among the plurality of branches is less than or equal to the maximum allowable DCIR difference ratio, the branch overcurrent warning would not be easily occurred again by the uneven distribution caused by the DCIR difference. Moreover, after the system has been operating in the same current direction for a long time, since the branch with a lower DCIR would be distributed with a higher current and would get aged faster when operating in the same current direction, the DCIR difference among the branches will be gradually decreased, and the risk of a branch overcurrent warning caused by the DCIR difference among the branches will be decreased.

In some cases, for example when the actual maximum DCIR difference ratio among the plurality of branches has exceeded the maximum allowable DCIR difference ratio, it is possible that even when the total current limit value in the charging direction of the system has been decreased to the first total current limit value in the present current direction, the branch overcurrent warning still occurs once more. In an embodiment, in order to address such cases, after setting the total current limit value in the present current direction of the battery parallel system from the default total current limit value in the present current direction to the first total current limit value in the present current direction, the method may further include: when the branch overcurrent warning occurs once more in the battery parallel system, successively reducing the total current limit value in the present current direction of the battery parallel system by a predetermined current limit value decrement, until the branch overcurrent warning does not occur in the battery parallel system. The predetermined current limit value decrement may be a reduction amount of current limit value by which the total current limit value is reduced for each time, it can be represented by an absolute value or a percentage for example. The value of the predetermined current limit value decrement can be set according to actual needs. For example, the predetermined current limit value decrement may be set to a value in a range of 5% to 20% of the default total current limit value, for example, to 5%, 10%, 15%, 20% of the default total current limit value. For example, when the predetermined current limit value decrement is set to 10%, for the battery parallel system with 2 branches, when the branch overcurrent warning occurs for the first time, by the above method, the total current limit value in the charging direction of the system has been decreased to 70% of the default total current limit value in the charging direction. After then, when the branch overcurrent warning occurs for the second time, with a predetermined current limit value decrement of 10% of the default total current limit value, the total current limit value in the charging direction of the system can be decreased to 60% of the default total current limit value in the charging direction. After then, when the branch overcurrent warning occurs for the third time, the total current limit value in the charging direction of the system can be decreased to 50% of the default total current limit value in the charging direction.

In the above embodiment, if the total current limit value of the system has been decreased to be too low, the current provided to the load (for example, a vehicle) may not be enough for the load to operate normally. In an embodiment, in order to address such cases, during the process of successively reducing the total current limit value in the present current direction of the battery parallel system, the total current limit value in the present current direction of the battery parallel system may be restricted to be not less than a predetermined total current lower limit value in the present current direction. In other words, it is a lowest current limit value which the total current limit value in the present current direction of the battery parallel system is allowed to be. The value of the predetermined total current lower limit value can be set according to actual needs. For example, the predetermined total current lower limit value may be set to a value in a range of 40% to 60% of the default total current limit value, for example, to 50%, 55%, 60% of the default total current limit value. For example, the predetermined total current lower limit value in the present current direction may be set to 50% of the default total current limit value in the present current direction, in this way, the total current limit value in the present current direction of the battery parallel system is limited to be not less than 50% of the default total current limit value in the present current direction. That is, after the total current limit value in the present current direction of the system is decreased to 50%, the total current limit value in the present current direction will no longer decrease further. The Simulation tests have shown that, when it is finally decreased to 50% of the default total current limit value in the present current direction, it can ensure stable operation of the system and the branch overcurrent warning will no longer occur by the uneven current distribution.

If the system is always kept in the decreased first total current limit value in the present current direction, the current output to the load is restricted and the operation performance of the load may be lowered. Therefore, when the risk for causing the warning is decreased or eliminated, it is conducive to recover the total current limit value so that the load can operate with a higher performance. In an embodiment, after setting the total current limit value in the present current direction of the battery parallel system from the default total current limit value in the present current direction to the first total current limit value in the present current direction, the method may further includes: when it is detected that a state in which an actual total current value of the battery parallel system is less than a predetermined proportion of the default total current limit value in the present current direction has been lasted for a time duration reaching a preset time duration threshold, recovering the total current limit value in the present current direction of the battery parallel system to the default total current limit value in the present current direction. The value of predetermined proportion (i.e., a percentage) can be set according to actual needs. For example, the predetermined proportion may be set to a value in a range of 60% to 80% of the default total current limit value, for example, to 60%, 65%, 70%, 75%, 80% of the default total current limit value. For example, the predetermined proportion may be set as 70%, and the preset time duration threshold may be set as 5 min, as such, when it is detected that the actual total current value of the battery parallel system is less than 70% of the default total current limit value in the present current direction for a time duration reaching 5 min, then the system can be returned to the normal state and the total current limit value in the present current direction of the battery parallel system can be recovered to the default total current limit value in the present current direction.

In case that the total current limit value in the present current direction of the system has been decreased to the first total current limit value in the present current direction, when the system keeps running in the same present current direction, as long as the actual maximum DCIR difference ratio among the plurality of branches is less than or equal to the maximum allowable DCIR difference ratio, the branch overcurrent warning would not be easily occurred again. Moreover, when the system keeps running in the same present current direction and with no current direction change occur, the difference in SOC caused by the actual DCIR difference ratio among the branches may further helps to reduce the actual current difference between the branches. Therefore, there is no need for additional current limiting based on the SOC difference when the system keeps running in the same present current direction. However, during the operation, the system may suddenly switch from the present current direction to the opposite current direction (for example, when the user suddenly presses on the brake of the vehicle, and the system switches from the discharging direction to the charging direction), if the SOC difference among the branches are high at the time of switching, it is also possible to cause another branch overcurrent warning even when the actual maximum DCIR difference ratio among the plurality of branches is less than or equal to the maximum allowable DCIR difference ratio.

In an embodiment, in order to address the above cases, after setting the total current limit value of the battery parallel system to the first total current limit value, the method may further include a step of setting a total current limit value in an opposite current direction that is opposite to a present current direction of the battery parallel system based on an actual SOC of each of the plurality of branches. Specifically, a plurality of reference State of Charge (SOC) difference ranges being higher than an SOC difference threshold, and a plurality of designated total current limit values in a charging direction and a discharging direction respectively corresponding to the plurality of SOC difference ranges, are pre-stored in the battery parallel system. When the system is in overcurrent warning state and after setting the total current limit value in the present current direction of the battery parallel system from the default total current limit value in the present current direction to the first total current limit value in the present current direction, the method may further include: monitoring an actual SOC of each of the plurality of branches; and when it is monitored that an actual maximum SOC difference among the plurality of branches in a present current direction transitions from not exceeding the SOC difference threshold to exceeding the SOC difference threshold, marking an opposite current direction that is opposite to the present current direction as a valid current direction, and maintaining the marking of the valid current direction until it is monitored that an actual maximum SOC difference among the plurality of branches in a present current direction transitions from exceeding the SOC difference threshold to not exceeding the SOC difference threshold. Optionally, the above present current direction can be further marked as an invalid current direction and maintained together with the marking and maintenance of the valid current direction. During a time period within which the marking of the valid current direction (and the marking of the invalid current direction) is maintained, when an actual maximum SOC difference among the plurality of branches in a present current direction falls within a first reference SOC difference range of the plurality of reference SOC difference ranges, and in condition that an opposite current direction that is opposite to the present current direction is the one marked as the valid current direction, setting a total current limit value in the opposite current direction of the battery parallel system to a first designated total current limit value in the opposite current direction that corresponds to the first reference SOC difference range; otherwise, in condition that the opposite current direction is not the one marked as the valid current direction (i.e., it is the one marked as the invalid current direction), forbidding setting the total current limit value in the opposite current direction to the first designated total current limit value, as such, the total current limit value in the opposite current direction of the battery parallel system is kept as it was.

The designated total current limit value in the opposite current direction, may be lower than a first total current limit value in the opposite current direction. The first total current limit value in the opposite current direction can be calculated similarly to that of the first total current limit value in the present current direction, by using the parameters in the opposite current direction. In this way, when the system is in overcurrent warning state and the actual maximum SOC difference is detected to be higher than an SOC difference threshold, the total current limit value in the opposite current direction is further decreased in advance, therefore, even when the system suddenly switches to the opposite current direction, the possibility of causing another warning is decreased. For example, the SOC difference threshold may be 2%.

The SOC difference between two branches, may refer to a difference between a higher SOC of one of the two branches and a lower SOC of the other of the two branches. Therefore, the maximum SOC difference among the plurality of branches, may refer to a difference between the highest SOC of the branches and the lowest SOC of the branches. Accordingly, the actual maximum SOC difference among the plurality of branches, refers to the actual/real maximum value of SOC difference among the plurality of branches of the battery parallel system during operation. The SOC difference threshold is a threshold used to compare and determine whether the actual maximum SOC difference among the plurality of branches has exceeded a predetermined threshold value.

Further, in an embodiment, the designated total current limit value in the opposite current direction can be set lower as the actual maximum SOC difference is higher.

In an embodiment, after setting the total current limit value in the opposite current direction of the battery parallel system to the first designated total current limit value that corresponds to the first reference SOC difference range, the method may further include: when it is monitored that the actual maximum SOC difference among the plurality of branches is changed to fall within a second reference SOC difference range of the plurality of reference SOC difference ranges that is different from the first reference SOC difference range, setting the total current limit value in the opposite current direction of the battery parallel system to a second designated total current limit value in the opposite current direction that corresponds to the second reference SOC difference range.

In an embodiment, after setting the total current limit value in the opposite current direction of the battery parallel system to the first designated total current limit value that corresponds to the first reference SOC difference range, the method may further include: when it is detected that the actual maximum SOC difference among the plurality of branches is changed to be no more higher than the SOC difference threshold and falls out of all of the plurality of reference SOC difference ranges, recovering the total current limit value in the opposite current direction of the battery parallel system to the default total current limit value in the opposite current direction, and clearing the marking of the valid current direction.

To describe further, when it is detected that the actual maximum SOC difference among the plurality of branches is changed to be no more higher than the SOC difference threshold and falls out of all of the plurality of reference SOC difference ranges, no matter whether the present current direction of the battery parallel system has been switched to the opposite current direction or not, the total current limit value in the present current direction of the battery parallel system may be kept as it was, and the total current limit value in the opposite current direction of the battery parallel system is recovered to a default total current limit value in the opposite current direction.

When the transition from the actual maximum SOC difference between branches being no more than the SOC difference threshold to more than the SOC difference threshold occurs in a certain current direction, it is only desired to further limit the current in the opposite current direction of that certain current direction to the designated total current limit value, and it is not desired to further limit the current in that certain current direction to the designated total current limit value. However, when the present current direction changes multiple times consecutively, due to the change in the present current direction, the above original certain current direction might be treated as an opposite current direction and be limited to the designated total current limit value, which is undesirable.

Therefore, in the aforementioned solution of setting the total current limit value based on the SOC in this application, the present current direction at the time when the actual maximum SOC difference between branches is detected to transition from not exceeding the SOC difference threshold to exceeding the SOC difference threshold is marked as an invalid current direction, and an opposite current direction of that invalid current direction is marked as a valid current direction. Then, only the total current limit value in the valid current direction is allowed be set to the designated total current limit value, while the total current limit value in invalid current direction is not allowed to be set to the designated total current limit value (in other words, even when the present current direction has changed to the valid current direction and the actual maximum SOC difference between branches in the present current direction keeps being higher than the SOC difference threshold, the system will not change the total current limit value in the invalid current direction as the present opposite current direction to the designated total current limit value), until the actual maximum SOC difference between branches in the present current direction falls below the SOC difference threshold. When the actual maximum SOC difference between branches in the present current direction falls below the SOC difference threshold, the total current limit value in the valid current direction can be recovered to the default total current limit value in the valid current direction. Once the invalid and valid current directions are marked, they will not change due to changes in the present current direction, until the actual maximum SOC difference between branches in the present current direction falls below the SOC difference threshold, at which point the markings for the invalid and valid current directions are cleared. During the period of time in which the markings for the invalid and valid current directions are maintained, when the actual maximum SOC difference between branches in the present current direction is higher than the SOC difference threshold, the marking for the opposite current direction is checked, if the opposite current direction is the one marked as the valid current direction, then the total current limit value in the opposite current direction is set to the corresponding designated total current limit value in the opposite current direction, and if the opposite current direction is the one marked as the invalid current direction, then the total current limit value in the opposite current direction is kept as it was, without further setting it to the corresponding designated total current limit value in the opposite current direction.

This solution can be implemented, for example, by setting flag bits. Specifically, a flag bit for the charging direction and a flag bit for a discharging direction are recorded in the system: i. When the transition of the actual maximum SOC difference among the branches from not exceeding the SOC difference threshold to exceeding the SOC difference threshold is occurred in the charging direction, the discharging direction flag bit is set to valid, and the charging direction flag bit is set to invalid; ii. When the transition of the actual maximum SOC difference among the branches from not exceeding the SOC difference threshold to exceeding the SOC difference threshold is occurred in the discharging direction, the charging direction flag bit is set to valid, and the discharging direction flag bit is set to invalid; iii. At one same time, only one flag bit can be valid; iv. The validity/invalidity of the charging and discharging direction flag bits remain unchanged when the present current direction changes; v. Only the total current limit value in the current direction with a valid flag bit can be additionally limited to the designated total current limit value, and the total current limit value in the current direction with an invalid flag bit is not subjected to additional limiting to designated total current limit value; vi. When the actual maximum SOC difference among the branches in the present current direction of the system becomes not higher than the SOC difference threshold, the total current limit value in the current direction with a valid flag bit is restored to the default total current limit in that current direction with a valid flag bit, and then both flag bits can be reset to 0. As such, for example, in condition that the discharging direction flag bit is set to valid, and the charging direction flag bit is set to invalid, when the actual maximum SOC difference between branches in the charging direction (as the present current direction) is higher than the SOC difference threshold, and it is checked that the discharging direction (as the opposite current direction) flag bit is set to valid, then the total current limit value in the discharging direction is set to the corresponding designated total current limit value in the discharging direction; in contrast, if the present current direction is then switched to the discharging direction, when the actual maximum SOC difference between branches in the discharging direction (as the present current direction) is higher than the SOC difference threshold, and it is checked that the charging direction (as the opposite current direction) flag bit is set to invalid, then the total current limit value in the charging direction is kept as it was, without further setting to the corresponding designated total current limit value in the charging direction.

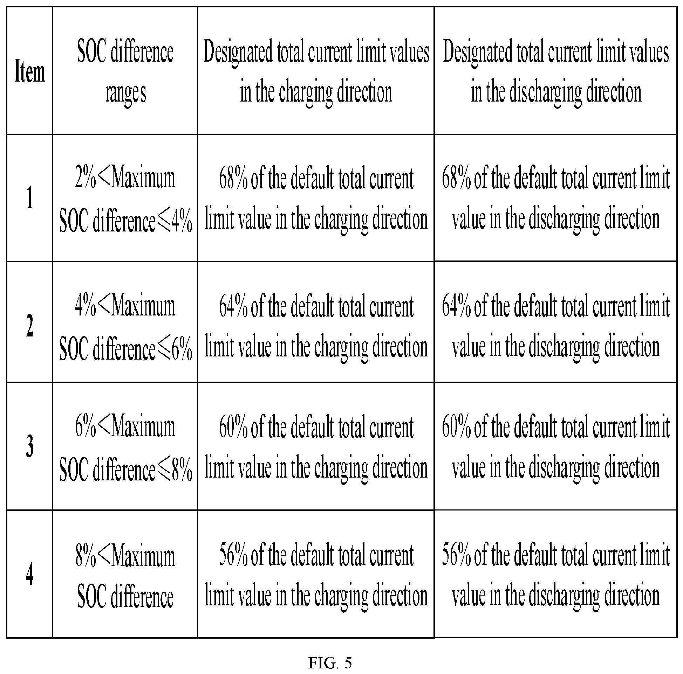

Referring to FIG. 5, for example, the SOC difference range being higher than the SOC difference threshold of 2%, may be divided into 4 SOC difference ranges, and each SOC difference range has a corresponding designated total current limit value. When the actual maximum SOC difference among the plurality of branches falls within or changed to fall within any one of the 4 SOC difference ranges, the system is switched to be in the over SOC difference state, and the total current limit value in the opposite current direction of the battery parallel system is updated to the designated total current limit value corresponding to that one SOC difference range. When the actual maximum SOC difference among the plurality of branches is no more than the SOC difference threshold of 2% and thus falls out of all the 4 SOC difference ranges, the system is switched to be not in the over SOC difference state, and the total current limit value in the opposite current direction of the battery parallel system is set to the first total current limit value, or to the default total current limit value (depending on what the total current limit value in the opposite current direction is set to by default before the designated total current limit value is set).

In the above embodiments, it is mainly considered about how to adjust the total current limit value of the system when the branch overcurrent warning is occurred mainly by the uneven current distribution due to the DCIR difference among branches. In some cases, a certain more serious overcurrent may be occurred by some system errors or failures other than the DCIR difference. In the embodiments below, different levels of overcurrent reminders (for example including the branch overcurrent warning, a branch overcurrent alarm, and branch overcurrent error described below) can be occurred and correspondingly different measurements can be taken.

In some embodiments, the branch overcurrent warning occurs in the battery parallel system when an actual current value of at least one of the plurality of branches is higher than the reference branch current limit value in the present current direction thereof and no more than the reference branch current limit value in the present current direction thereof multiplying by a first multiple factor. When the branch overcurrent warning occurs, the system is switched to the overcurrent warning state, the total current limit value in the present current direction is set to the first total current limit value in the present current direction as described above. For example, the first total current limit value in the present current direction determined in the above S120 may be 70% of the default total current limit value in the present current direction.

In some embodiments, a branch overcurrent alarm occurs in the battery parallel system when an actual current value of at least one of the plurality of branches is higher than the reference branch current limit value in the present current direction thereof multiplying by the first multiple factor and no more than the reference branch current limit value in the present current direction thereof multiply by a second multiple factor higher than the first multiple factor; the branch overcurrent alarm overrides the branch overcurrent warning. When the branch overcurrent alarm occurs, the system is switched to the overcurrent alarm state, and the total current limit value in the present current direction is set to a second total current limit value in the present current direction lower than the first total current limit value in the present current direction. For example, the second total current limit value in the present current direction may be preset as 50% of the default total current limit value in the present current direction.

In some embodiments, a branch overcurrent error occurs in the battery parallel system when an actual current value of at least one of the plurality of branches is higher than the reference branch current limit value in the present current direction thereof multiply by the second multiple factor; the branch overcurrent error overrides the branch overcurrent alarm. When the branch overcurrent error occurs, the system is switched to the overcurrent error state, and the total current limit value in the present current direction is set to a third total current limit value in the present current direction lower than the second total current limit value in the present current direction. For example, the third total current limit value in the present current direction may be preset as 0% of the default total current limit value in the present current direction, that is, the total current in the present current direction of the system is cutoff when the branch overcurrent error occurs.

The branch overcurrent alarm overrides the branch overcurrent warning means that, if both the condition for triggering the branch overcurrent alarm and the condition for triggering the branch overcurrent warning are met, the branch overcurrent alarm is given a higher priority to be triggered than the branch overcurrent warning. Therefore, when both the condition for triggering the branch overcurrent alarm and the condition for triggering the branch overcurrent warning are met, the system will give priority to regarding the system is in the overcurrent alarm state than in the overcurrent warning state, and give priority to performing processing/taking measures under the branch overcurrent alarm than under the branch overcurrent warning. Similarly, the branch overcurrent error overrides the branch overcurrent alarm means that, if both the condition for triggering the branch overcurrent error and the condition for triggering the branch overcurrent alarm are met, the branch overcurrent error is given a higher priority to be triggered than the branch overcurrent alarm. Therefore, when both the condition for triggering the branch overcurrent error and the condition for triggering the branch overcurrent alarm are met, the system will give priority to regarding the system is in the overcurrent error state than in the overcurrent alarm state, and give priority to performing processing/taking measures under the branch overcurrent error than under the branch overcurrent alarm. In other words, if the occurrence condition is met for multiple of the branch overcurrent alarm, the branch overcurrent warning, and the branch overcurrent error, the system will perform processes/taking measures under one of them having the highest priority to be triggered.

For example, the first and second multiple factors may be 1.1 and 1.2 respectively, and correspondingly, when an actual current value of a branch is no more than the reference branch current limit value in the present current direction of this branch, no overcurrent reminder would occur for this branch; when an actual current value of a branch is higher than the reference branch current limit value in the present current direction of this branch, and no more than 1.1 times of the reference branch current limit value in the present current direction, a branch overcurrent warning will occur and the total current limit value in the present current direction is set to 70% of the default total current limit value in the present current direction; when an actual current value of a branch is higher than 1.1 times of the reference branch current limit value in the present current direction of this branch, and no more than 1.2 times of the reference branch current limit value in the present current direction, a branch overcurrent alarm will occur and the total current limit value in the present current direction is set to 50% of the default total current limit value in the present current direction; and when an actual current value of a branch is higher than 1.2 times of the reference branch current limit value in the present current direction of this branch, a branch overcurrent error will occur and the total current limit value in the present current direction is set to 0% of the default total current limit value in the present current direction.

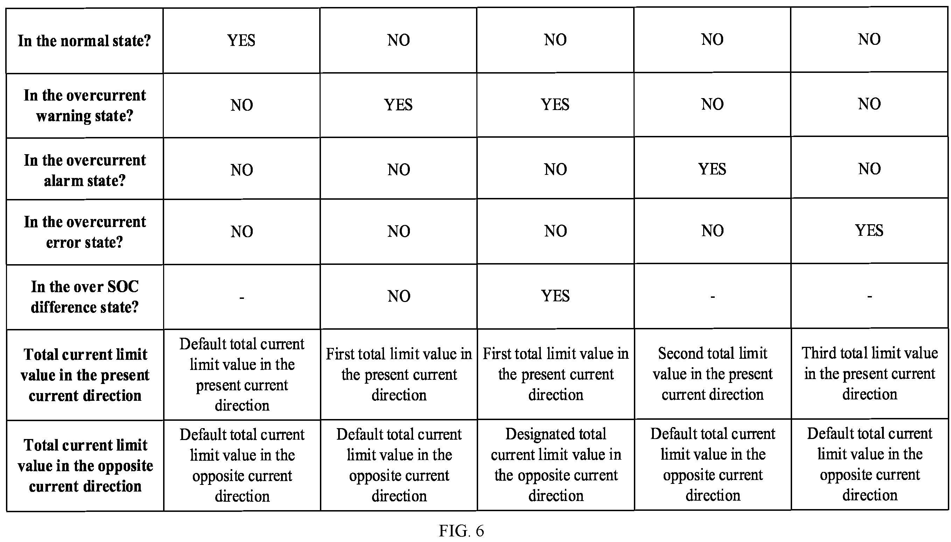

Referring to FIG. 6, in combination of the above various embodiments, the setting of the total current limit value in the present current direction in different states is as shown in FIG. 6. It is to be noted that, although in FIG. 6, when in the overcurrent warning state but not in the over SOC difference state, and when in the overcurrent alarm state, and when in the overcurrent error state, the total current limit value in the opposite current direction of the system is set to the default total current limit value in the opposite current direction by default, however, the total current limit value in the opposite current direction of the system in said states may instead be set to other values. For example, in an alternative embodiment, when in the overcurrent warning state but not in the over SOC difference state, the total current limit value in the opposite current direction of the system is set to the first total current limit value in the opposite current direction; when in the overcurrent alarm state, the total current limit value in the opposite current direction of the system is set to the second total current limit value in the opposite current direction; and when in the overcurrent error state, the total current limit value in the opposite current direction of the system is set to the third total current limit value in the opposite current direction.

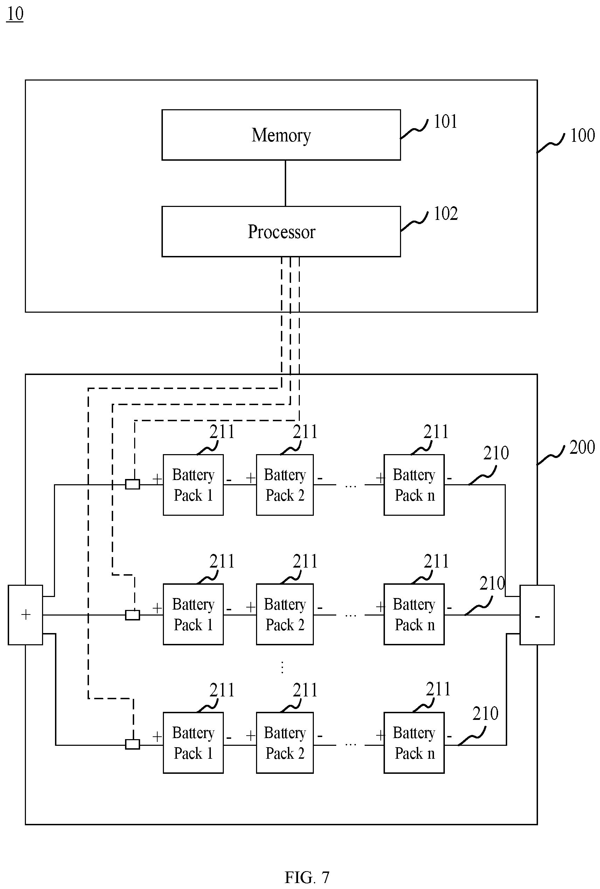

Referring to FIG. 7, in a second aspect of the present disclosure, a current control system 10 is provided. The current control system 10 may be used to implement the current control method described in any of the above embodiments. Specifically, the current control system 10 includes a battery management system 100. The battery management system 100 is communicatively connected to a battery parallel system 200. The battery parallel system 200 includes a plurality of branches 210 connected in parallel, each of the plurality of branches 210 includes one or more battery packs 211. The one or more battery packs 211 in each branch 210 may be connected with each other in parallel, in series, or partially in parallel and partially in series. Each of the battery packs 211 may further be consisted of a plurality of cells connected in parallel and/or in series.

The battery management system 100 includes a memory 101 and a processor 102, the memory 101 stores computer readable instructions, which, when executed by the processor 102, cause the processor 102 to perform operations to implement the current control method described in any of the above embodiments.

In an embodiment, the current control system 10 may further include the battery parallel system 200.

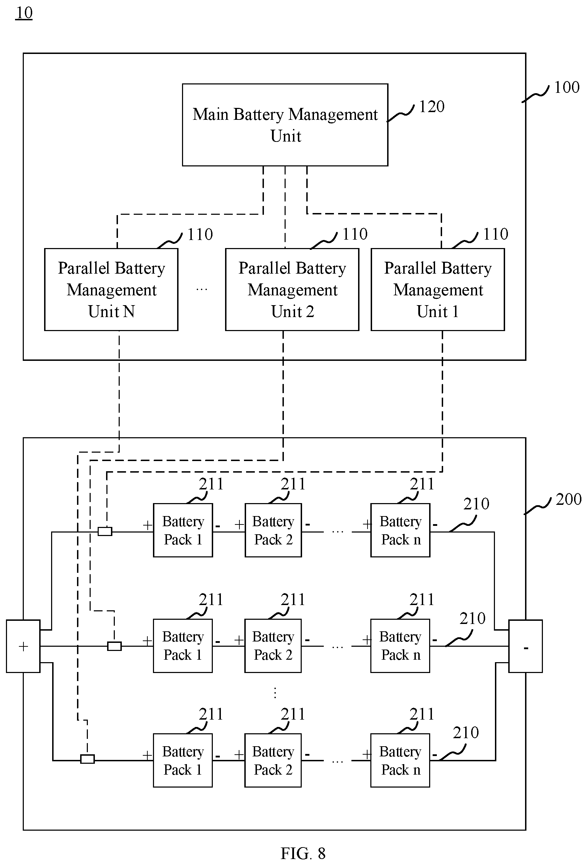

In an embodiment, referring to FIG. 8, the battery management system 100 may include: a plurality of parallel battery management units 110, each of the plurality of parallel battery management units 110 is communicatively connected to a corresponding one of the plurality of branches 210 respectively, and is configured to: determine a reference branch current limit value in the present current direction of the corresponding one of the plurality of branches 210, monitor an actual current value of the corresponding one of the plurality of branches 210, and cause a branch overcurrent warning when it is detected that the actual current value of the corresponding one of the plurality of branches exceeds the reference branch current limit value in the present current direction of the corresponding one of the plurality of branches 210; and a main battery management unit 120, electrically connect to the plurality of parallel battery management units 110, and is configured to: obtain a reference branch current limit value in the present current direction of each of the plurality of branches 210 from the plurality of parallel battery management units 110, and set the total current limit value in the present current direction of the battery parallel system 200 based on the obtained reference branch current limit value in the present current direction of each of the plurality of branches 210. The memory 101 and the processor 102 are included in the main battery management unit 120 and/or the plurality of parallel battery management units 110.

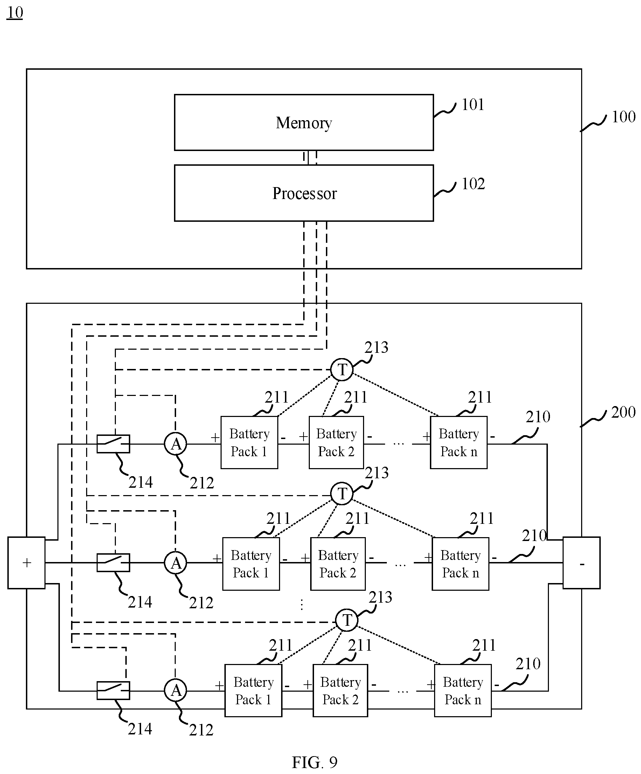

In an embodiment, referring to FIG. 9, the current control system 10 may further include: a plurality of current sensors 212, each of the plurality of current sensors 212 is disposed in a corresponding one of the plurality of branches 210, and is configured to detect an actual current value in the corresponding one of the plurality of branches 210 and transmit the detected actual current value to the battery management system 100.

In an embodiment, referring to FIG. 9, the current control system 10 may further include: a plurality of temperature detection device 213, each of the temperature detection device 213 is disposed at a corresponding one of the plurality of branches 210, and is configured to detect a temperature value of the corresponding one of the plurality of branches 210 and transmit the detected temperature value of that branch to the battery management system 100. In some embodiments, the temperature detection device 213 for each branch may include one temperature sensor configured to detect the temperature of all the packs in that branch, as the detected temperature of that branch. In some embodiments, the temperature detection device 213 for each branch may include n temperature sensors configured to detect the temperatures of n packs in that branch in a one-to one correspondence, and then an average value of the detected n temperatures can be used as the detected temperature of that branch. In some embodiments, each of the temperature sensor for a battery pack may further include X sub-sensors configured to detect the temperatures of X modules in that pack in a one-to one correspondence, and then an average value of the detected X temperatures can be used as the detected temperature of that pack.

In an embodiment, referring to FIG. 9, the current control system 10 may further include: a plurality of relays 214, each of the plurality of relays 214 is disposed in a corresponding one of the plurality of branches 210, and is configured to switch on or off the corresponding one of the plurality of branches 210 in response to an instruction received from the battery management system 100.

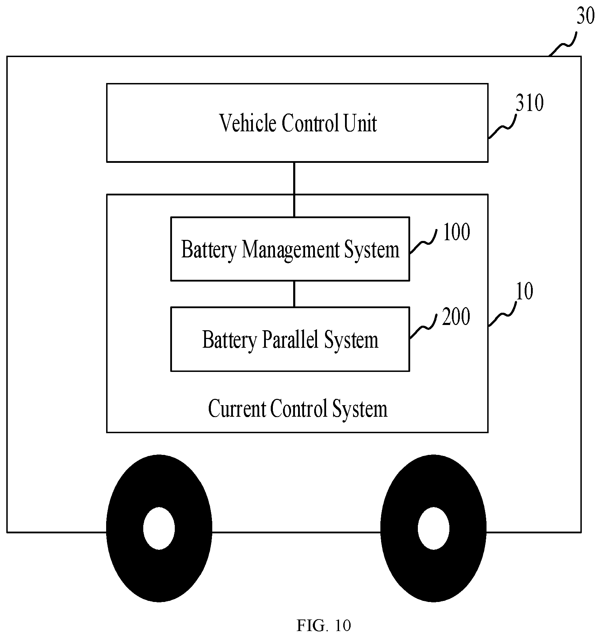

Referring to FIG. 10, in a third aspect of the present disclosure, a vehicle 30 is provided. The vehicle 30 may be a wheeled or un-wheeled transportation tool. The vehicle 30 includes a vehicle control unit 310 and the above current control system 10. The battery parallel system 200 is mounted on the vehicle 30, and is configured to provide power for operations such as travelling of the vehicle 30. In some examples, the positive and negative electrodes of the battery parallel system 200 are connected to the power distribution unit (PDU) of the vehicle 30, and to supply power for the high voltage system of the vehicle 30. The battery management system 100 is communicatively connected to the vehicle control unit 310, and is configured to set the total current limit value in the present current direction of the battery parallel system 200 by sending a total current limit instruction to the vehicle control unit 310, the total current limit instruction is used to instruct the vehicle control unit 310 to limit an actual current in the present current direction between the load (for example various actuators) of the vehicle 30 and the battery parallel system 200 to be no more than the total current limit value in the present current direction.

In a fourth aspect of the present disclosure, a non-transitory computer readable storage medium is provided. The non-transitory computer readable storage medium is stored thereon a computer program. When the computer program is executed by a processor, the processor is caused to implement the current control method described in any of the above embodiments.

The technical features in the above embodiments may be combined arbitrarily. For concise description, not all possible combinations of the technical features in the above embodiments are described. However, provided that they do not conflict with each other, all combinations of the technical features are to be considered to be within the scope described in this specification.

The above-mentioned embodiments only describe several implementations of the present disclosure, and their description is specific and detailed, but should not be understood as a limitation on the patent scope of the present disclosure. It should be noted that, for a person of ordinary skill in the art may further make variations and improvements without departing from the conception of the present disclosure, and these all fall within the protection scope of the present disclosure. Therefore, the protection scope of the present disclosure should be subject to the appended claims.

## Claims

1. A current control method, applied to a battery parallel system, wherein the battery parallel system comprises a plurality of branches connected in parallel, each of the plurality of branches comprises one or more battery packs, and the method comprises:
obtaining a reference branch current limit value of each of the plurality of branches;
determining a first total current limit value based on a maximum allowable Direct Current Internal Resistance (DCIR) difference ratio among the plurality of branches, the number of the plurality of branches, and the reference branch current limit value of each of the plurality of branches, wherein the first total current limit value is determined such that a branch overcurrent warning will not occur when an actual maximum DCIR difference ratio among the plurality of branches is less than or equal to the maximum allowable DCIR difference ratio; and
when the branch overcurrent warning occurs in the battery parallel system, setting a total current limit value of the battery parallel system from a default total current limit value to the first total current limit value;
wherein the branch overcurrent warning occurs when it is detected that an actual current value of at least one of the plurality of branches exceeds the reference branch current limit value.

2. The method according to claim 1, wherein obtaining a reference branch current limit value comprises obtaining a reference branch current limit value in a present current direction,
wherein setting a total current limit value of the battery parallel system to the first total current limit value comprises setting a total current limit value in the present current direction of the battery parallel system to the first total current limit value; and
wherein the current direction comprising a charging direction or a discharging direction.

3. The method according to any of the preceding claims, wherein the maximum allowable DCIR difference ratio among the plurality of branches is determined in advance based on one or more of the following:
a State Of Health (SOH) threshold of replacement, when an actual SOH value of one of the branches is lower than the SOH threshold of replacement, at least part of the battery packs of the one of the branches is required to be replaced.

4. The method according to any of the preceding claims, wherein the default total current limit value is determined by multiplying a minimum current limit value among the reference branch current limit values of the plurality of branches by the number of the plurality of branches.

5. The method according to any of the preceding claims, wherein the determining the first total current limit value of the plurality of branches based on the number of the plurality of branches, the maximum allowable DCIR difference ratio, and the reference branch current limit value comprises:
giving a first assumption that one first branch of the battery parallel system has the lowest internal resistance and is distributed with a first distribution current limit value equal to the reference branch current limit value, giving a second assumption that the remaining second branches other than the first branch of the battery parallel system each has an internal resistance higher than the first branch such that an actual DCIR difference ratio between each of the second branches and the first branch is equal to the maximum allowable DCIR difference ratio, and calculating a second distribution current limit value with which each of the second branches should be distributed under the first and the second assumptions;
calculating a total distribution current limit value of the plurality of branches in a case that the first branch is distributed with the first distribution current limit value and each of the second branches is distributed with the second distribution current limit value; and
determining the first total current limit value based on the total distribution current limit value, wherein the first total current limit value is less than or equal to the total distribution current limit value.

6. The method according to any of the preceding claims, wherein the first total current limit value is determined based on a total current limit value reduction coefficient and the default total current limit value.

7. The method according to claim 6, wherein the total current limit value reduction coefficient is determined in advance based on the maximum allowable DCIR difference ratio among the plurality of branches, the number of the plurality of branches, and the reference branch current limit value, and wherein:
the total current limit value reduction coefficient is a first ratio of the first total current limit value to the default total current limit value, and the first ratio decreases as the maximum allowable DCIR difference ratio increases; or
the total current limit value reduction coefficient is a second ratio of the difference between the default total current limit value and first total current limit value, to the default total current limit value, and the second ratio increases as the maximum allowable DCIR difference ratio increases.

8. The method according to any of the preceding claims, wherein after setting the total current limit value of the battery parallel system to the first total current limit value, the method further comprises:
when the branch overcurrent warning occurs once more in the battery parallel system, successively reducing the total current limit value of the battery parallel system by a predetermined current limit value decrement, until the branch overcurrent warning does not occur in the battery parallel system;
wherein the predetermined current limit value decrement is a reduction amount of current limit value by which the total current limit value is reduced for each time, and the predetermined current limit value decrement is in a range of 5% to 20% of the default total current limit value.

9. The method according to claim 8, wherein during the process of successively reducing the total current limit value of the battery parallel system, the total current limit value of the battery parallel system is restricted to be not less than a predetermined total current lower limit value;
wherein the predetermined total current lower limit value is a lowest current limit value which the total current limit value of the battery parallel system is allowed to be, and the predetermined total current lower limit value is in a range of 40% to 60% of the default total current limit value.

10. The method according to any of the preceding claims, wherein after setting the total current limit value of the battery parallel system to the first total current limit value, the method further comprises:
when it is detected that a state in which an actual total current value of the battery parallel system is less than a predetermined proportion of the default total current limit value has been lasted for a time duration reaching a preset time duration threshold, recovering the total current limit value of the battery parallel system to the default total current limit value;
wherein the predetermined proportion is in a range of 60% to 80% of the default total current limit value.

11. The method according to any of the preceding claims, wherein after setting the total current limit value of the battery parallel system to the first total current limit value, the method further comprises a step of setting a total current limit value in an opposite current direction that is opposite to a present current direction of the battery parallel system based on an actual SOC of each of the plurality of branches,
wherein, a plurality of reference State of Charge (SOC) difference ranges being higher than an SOC difference threshold, and a plurality of designated total current limit values in a charging direction and a discharging direction respectively corresponding to the plurality of SOC difference ranges, are pre-stored in the battery parallel system, and wherein, the step of setting the total current limit value in the opposite current direction based on the actual SOC of each of the plurality of branches comprises:
monitoring an actual SOC of each of the plurality of branches; and
when it is monitored that an actual maximum SOC difference among the plurality of branches in a present current direction transitions from not exceeding the SOC difference threshold to exceeding the SOC difference threshold, marking an opposite current direction that is opposite to the present current direction as a valid current direction, and maintaining the marking of the valid current direction until it is monitored that the actual maximum SOC difference among the plurality of branches in the present current direction transitions from exceeding the SOC difference threshold to not exceeding the SOC difference threshold;
during a time period within which the marking of the valid current direction is maintained, when the actual maximum SOC difference among the plurality of branches in the present current direction falls within a first reference SOC difference range of the plurality of reference SOC difference ranges, and
in condition that the opposite current direction that is opposite to the present current direction is the one marked as the valid current direction, setting a total current limit value in the opposite current direction of the battery parallel system to a first designated total current limit value in the opposite current direction that corresponds to the first reference SOC difference range.

12. The method according to claim 11, wherein
during a time period within which the marking of the valid current direction is maintained, when an actual maximum SOC difference among the plurality of branches in a present current direction falls within a first reference SOC difference range of the plurality of reference SOC difference ranges, the method further comprises: in condition that the opposite current direction is not the one marked as the valid current direction, forbidding setting the total current limit value in the opposite current direction to the first designated total current limit value; and/or
after setting the total current limit value in the opposite current direction of the battery parallel system to the first designated total current limit value that corresponds to the first reference SOC difference range, the method further comprises: when it is monitored that the actual maximum SOC difference among the plurality of branches is changed to fall within a second reference SOC difference range of the plurality of reference SOC difference ranges that is different from the first reference SOC difference range, setting the total current limit value in the opposite current direction of the battery parallel system to a second designated total current limit value in the opposite current direction that corresponds to the second reference SOC difference range; and/or
after setting the total current limit value in the opposite current direction of the battery parallel system to the first designated total current limit value that corresponds to the first reference SOC difference range, the method further comprises: when it is detected that the actual maximum SOC difference among the plurality of branches is changed to be no more higher than the SOC difference threshold and falls out of all of the plurality of reference SOC difference ranges, recovering the total current limit value in the opposite current direction of the battery parallel system to a default total current limit value in the opposite current direction, and clearing the marking of the valid current direction.

13. A current control system, comprising a battery management system, wherein the battery management system is communicatively connected to a battery parallel system, the battery parallel system comprises a plurality of branches connected in parallel, each of the plurality of branches comprises one or more battery packs, the battery management system comprises a memory and a processor, the memory stores computer readable instructions, which, when executed by the processor, cause the processor to perform the method of any of claims 1 to 12, wherein
preferably, the current control system further comprises the battery parallel system; and/or
preferably, the battery management system comprises: a plurality of parallel battery management units is communicatively connected to a corresponding one of the plurality of branches respectively, and is configured to: determine a reference branch current limit value in the present current direction of the corresponding one of the plurality of branches, monitor an actual current value of the corresponding one of the plurality of branches, and cause a branch overcurrent warning when it is detected that the actual current value of the corresponding one of the plurality of branches exceeds the reference branch current limit value in the present current direction of the corresponding one of the plurality of branches; and a main battery management unit, electrically connect to the plurality of parallel battery management units, and is configured to: obtain a reference branch current limit value in the present current direction of each of the plurality of branches from the plurality of parallel battery management units, and set the total current limit value in the present current direction of the battery parallel system based on the obtained reference branch current limit value in the present current direction of each of the plurality of branches; wherein, the memory and the processor are included in the main battery management unit and/or the plurality of parallel battery management units; and/or
preferably, the current control system further comprises a plurality of current sensors, wherein each of the plurality of current sensors is disposed in a corresponding one of the plurality of branches, and is configured to detect an actual current value in the corresponding one of the plurality of branches and transmit the detected actual current value to the battery management system.

14. A vehicle, comprising a vehicle control unit and the current control system according to claim 13, wherein,
the battery parallel system is mounted on the vehicle, and is configured to provide power for operations of the vehicle; and
the battery management system is communicatively connected to the vehicle control unit, and is configured to set the total current limit value in the present current direction of the battery parallel system by sending a total current limit instruction to the vehicle control unit, the total current limit instruction is used to instruct the vehicle control unit to limit an actual current in the present current direction between the vehicle and the battery parallel system to be no more than the total current limit value in the present current direction.

15. A non-transitory computer readable storage medium, on which a computer program is stored, wherein when the computer program is executed by a processor, the processor is caused to implement the method according to any of claims 1 to 12.
